(19) Europäisches Patentamt
European Patent Office
Office européen des brevets

(11) **EP 4 489 464 A1**

(12) **EUROPEAN PATENT APPLICATION**
published in accordance with Art. 153(4) EPC

(43) Date of publication:
**08.01.2025 Bulletin 2025/02**

(21) Application number: **23773736.6**

(22) Date of filing: **17.03.2023**

(51) International Patent Classification (IPC):
**H04W 24/02** (2009.01)

(52) Cooperative Patent Classification (CPC):
**H04W 24/02; H04W 24/08**

(86) International application number:
**PCT/CN2023/082198**

(87) International publication number:
**WO 2023/179488 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.03.2022 CN 202210299848**

(71) Applicant: **Huawei Technologies Co., Ltd.
Shenzhen, Guangdong 518129 (CN)**

(72) Inventors:
• **TAO, Liang
Shenzhen, Guangdong 518129 (CN)**

• **BAO, Dewei
Shenzhen, Guangdong 518129 (CN)**
• **LI, Changlu
Shenzhen, Guangdong 518129 (CN)**
• **ZHAO, Wenlu
Shenzhen, Guangdong 518129 (CN)**
• **HE, Cong
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COVERAGE HOLE DETECTION METHOD AND RELATED DEVICE**

(57)    This application provides a coverage hole detection method and a related device, and is applied to the field of communication technologies. If a coverage hole exists between two access point APs, a terminal passes through the coverage hole when roaming between the two APs. Therefore, a roaming behavior of the terminal between the APs can reflect whether the coverage hole exists between the APs. An electronic device determines, based on a roaming behavior of a terminal between a first AP and a second AP, that a coverage hole exists between the first AP and the second AP. The roaming behavior of the terminal between the first AP and the second AP includes roaming behaviors of a plurality of terminals between the first AP and the second AP.

**600** ⌐ 601

Determine, based on a roaming behavior of a terminal between a first access point AP and a second AP, that a coverage hole exists between the first AP and the second AP, where the roaming behavior of the terminal between the first AP and the second AP includes roaming behaviors of a plurality of terminals between the first AP and the second AP

FIG. 6

## Description

This application claims priority to Chinese Patent Application No. 202210299848.3, filed with the China National Intellectual Property Administration on March 25, 2022 and entitled "COVERAGE HOLE DETECTION METHOD AND RELATED DEVICE", which is incorporated herein by reference in its entirety.

## TECHNICAL FIELD

This application relates to the field of communication technologies, and in particular, to a coverage hole detection method and a related device.

## BACKGROUND

Actual network scenarios are complex and changeable. For example, indoor decoration, function change, and personnel mobility all may cause a current network scenario to be different from a network scenario during network construction. In this case, network planning, deployment, and configuration during network construction may not necessarily meet requirements of the current network scenario, and a coverage hole is prone to occur. For example, there is an obstacle between an access point (access point, AP) and a terminal, or the terminal is forced to be associated with a remote AP because a location of the terminal is not covered by an AP. Consequently, a terminal in the coverage hole has a weak association signal, and user experience is poor. How to detect the coverage hole is a problem to be resolved.

## SUMMARY

This application provides a coverage hole detection method and a related device, to detect a coverage hole of a wireless local area network (wireless local area network, WLAN).

According to a first aspect, this application provides a coverage hole detection method. The method may be applied to an electronic device, and the electronic device may be a WLAN controller, an analyzer, an AP, or the like. The electronic device determines, based on a roaming behavior of a terminal between a first AP and a second AP, that a coverage hole exists between the first AP and the second AP. The roaming behavior of the terminal between the first AP and the second AP includes roaming behaviors of a plurality of terminals between the first AP and the second AP.

If a coverage hole exists between two APs, the terminal passes through the coverage hole when roaming between the two APs. Therefore, roaming behaviors of a plurality of terminals between APs can reflect whether a coverage hole exists between the APs. Therefore, in this solution, detection of the coverage hole between the two APs can be implemented based on the roaming behaviors of a plurality of terminals between the two APs.

In a possible implementation, the roaming behavior includes roaming handover duration. The electronic device obtains roaming handover duration of the plurality of terminals, and when the roaming handover duration of the plurality of terminals meets a condition, the electronic device determines that the coverage hole exists between the first AP and the second AP. Roaming handover duration of each terminal in the plurality of terminals indicates: duration from a time point when the terminal leaves the first AP to a time point when the terminal is associated with the second AP, or duration from a time point when the terminal leaves the second AP to a time point when the terminal is associated with the first AP. Roaming handover duration of any terminal in the plurality of terminals includes: roaming handover duration in which the any terminal roams from the first AP to the second AP, and/or roaming handover duration in which the any terminal roams from the second AP to the first AP.

In this implementation, when the plurality of terminals have the roaming behaviors between the first AP and the second AP, the roaming handover duration of the plurality of terminals may be obtained. When the roaming handover duration of the plurality of terminals meets a first condition, it indicates that roaming experience of the terminals between the first AP and the second AP is poor, to determine that the coverage hole exists between the first AP and the second AP.

In a possible implementation, the first condition includes: a quantity of terminals whose roaming handover duration reaches a duration threshold reaches a quantity threshold, and/or a proportion of the quantity of terminals whose roaming handover duration reaches the duration threshold reaches a proportion threshold.

In this implementation, if the quantity of terminals, whose roaming handover duration reaches the duration threshold, in the plurality of terminals reaches the quantity threshold, or the proportion of the quantity of terminals, whose roaming handover duration reaches the duration threshold, in the plurality of terminals reaches the proportion threshold, it indicates that the roaming experience of the terminal between the first AP and the second AP is poor, to determine that the coverage hole exists between the first AP and the second AP.

In a possible implementation, that the terminal leaves the first AP includes: The terminal is disassociated from the first AP, or signal strength of the first AP associated with the terminal is less than a signal strength threshold. It should be understood that the roaming handover duration refers to duration from a time point when the terminal is disassociated from one AP to a time point when the terminal is associated with the other AP. Alternatively, the roaming handover duration refers to duration from a time point when signal strength of one AP associated with the terminal is less than the signal strength threshold to a time point when the terminal is associated with the other AP.

In a possible implementation, that the terminal leaves the second AP includes: The terminal is disassociated from the second AP, or signal strength of the second AP associated with the terminal is less than the signal strength threshold.

In a possible implementation, the roaming behavior includes signal strength before roaming. The electronic device obtains signal strength before roaming of the plurality of terminals, and when the signal strength before roaming of the plurality of terminals meet a second condition, the electronic device determines that the coverage hole exists between the first AP and the second AP. Signal strength before roaming of each terminal in the plurality of terminals includes: N pieces of signal strength that is of the terminal before the terminal is associated with the second AP in a process in which the terminal roams from the first AP to the second AP, and/or N pieces of signal strength that is of the terminal before the terminal is associated with the first AP in a process in which the terminal roams from the second AP to the first AP, where N is an integer greater than or equal to 1.

In this implementation, when the plurality of terminals have the roaming behaviors between the first AP and the second AP, the signal strength before roaming of the plurality of terminals may be obtained. When the signal strength before roaming of the plurality of terminals meets the second condition, it indicates that the roaming experience of the terminal between the first AP and the second AP is poor, to determine that the coverage hole exists between the first AP and the second AP.

In a possible implementation, the second condition includes: a quantity of terminals whose signal strength before roaming is less than a signal strength threshold reaches a quantity threshold, and/or a proportion of the quantity of terminals whose signal strength before roaming is less than the signal strength threshold reaches a proportion threshold.

In a possible implementation, the electronic device determines, based on a roaming behavior of a terminal between a third AP and a fourth AP, that the coverage hole exists between the third AP and the fourth AP, and displays a location of the coverage hole on a graphical user interface. The location of the coverage hole is a crosspoint of a connection line between the first AP and the second AP and a connection line between the third AP and the fourth AP. It should be noted that a connection line between APs includes a straight line, a curve line, and the like. This is not specifically limited in this application.

The crosspoint exists between the connection line between the first AP and the second AP and the connection line between the third AP and the fourth AP, which indicates that a roaming terminal between the first AP and the second AP and a roaming terminal between the third AP and the fourth AP pass through a same area during roaming. Therefore, when the coverage hole exists between the first AP and the second AP, and the coverage hole also exists between the third AP and the fourth AP, it may be determined that the crosspoint is the location of the coverage hole. The location of the coverage hole is displayed to help operation and maintenance personnel quickly adjust deployment, enhance signal coverage in the area, and improve user experience.

According to a second aspect, this application provides a coverage hole detection method. The method may be applied to an electronic device, and the electronic device may be a WLAN controller, an analyzer, an AP, or the like. The electronic device determines, based on a quantity of resident terminals of the AP and a quantity of weak-coverage terminals in the resident terminals, whether the AP has a coverage hole. The resident terminal of the AP is a terminal whose duration of association with the AP is greater than a duration threshold. The weak-coverage terminal is a terminal that is associated with the AP and whose signal strength is less than a signal strength threshold.

In a WLAN scenario, one AP may be associated with a plurality of terminals, some terminals are continuously associated with the AP (for example, duration in which the terminal is associated with the AP is greater than the duration threshold, that is, the terminal is the resident terminal), and some terminals may be only temporarily associated with the AP. For example, for an AP in an office of a manager, a terminal of the manager is continuously associated with the AP in the office, and a terminal of a person passing by outside the office is only temporarily associated with the AP. Signal quality of a terminal continuously associated with the AP can better reflect coverage quality of the AP. When the AP has the coverage hole, signal quality of some resident terminals associated with the AP may be poor. Therefore, in this solution, based on the resident terminal and the weak-coverage terminal in the resident terminal, the coverage hole can be detected, and the coverage hole detection is more accurate.

In a possible implementation, when the quantity of weak-coverage terminals reaches a quantity threshold, the electronic device determines that the AP has the coverage hole. Alternatively, when a ratio of the quantity of weak-coverage terminals to the quantity of resident terminals reaches a proportion threshold, the electronic device determines that the AP has the coverage hole. Alternatively, when the quantity of weak-coverage terminals reaches a quantity threshold and when a ratio of the quantity of weak-coverage terminals to the quantity of resident terminals reaches a proportion threshold, the electronic device determines that the AP has the coverage hole.

In a possible implementation, the electronic device sets a weight of each resident terminal based on duration of association between each resident terminal and the AP, and adjusts the quantity of resident terminals based on the weight of each resident terminal.

Longer duration of association between the terminal and the AP indicates a greater impact of the coverage quality of the AP on the terminal. Therefore, in this solution, the weight of the resident terminal is adjusted based on the duration of association between the resident terminal and the AP, and then the quantity of resident terminals is adjusted. Adjusting the quantity of resident terminals causes the quantity of weak-coverage terminals to be adjusted, so that the quantity of weak-coverage terminals can better match the duration of association between the resident terminal and the AP, thereby further improving accuracy of the coverage hole detection.

According to a third aspect, this application provides a coverage hole detection apparatus. The apparatus has a function of implementing the behavior in the method embodiment in the first aspect. The function may be implemented by hardware, or may be implemented by hardware executing corresponding software. The hardware or the software includes one or more modules corresponding to the foregoing function.

In a possible implementation, the apparatus includes an obtaining unit and a processing unit. The obtaining unit is configured to obtain a roaming behavior of a terminal between a first AP and a second AP. The processing unit is configured to determine, based on the roaming behavior of the terminal between the first AP and the second AP, that a coverage hole exists between the first AP and the second AP. The roaming behavior of the terminal between the first AP and the second AP includes roaming behaviors of a plurality of terminals between the first AP and the second AP.

In a possible implementation, the roaming behavior includes roaming handover duration. The obtaining unit is specifically configured to obtain roaming handover duration of the plurality of terminals. Roaming handover duration of each terminal in the plurality of terminals indicates: duration from a time point when the terminal leaves the first AP to a time point when the terminal is associated with the second AP, and/or duration from a time point when the terminal leaves the second AP to a time point when the terminal is associated with the first AP. The processing unit is specifically configured to: when the roaming handover duration of the plurality of terminals meets a first condition, determine that the coverage hole exists between the first AP and the second AP.

In a possible implementation, the first condition includes: a quantity of terminals whose roaming handover duration reaches a duration threshold reaches a quantity threshold; and/or a proportion of the quantity of terminals whose roaming handover duration reaches the duration threshold reaches a proportion threshold.

In a possible implementation, that the terminal leaves the first AP includes: The terminal is disassociated from the first AP; or signal strength of the first AP associated with the terminal is less than a signal strength threshold.

In a possible implementation, the roaming behavior includes signal strength before roaming. The obtaining unit is specifically configured to obtain signal strength before roaming of the plurality of terminals. The processing unit is specifically configured to: when the signal strength before roaming of the plurality of terminals meet a second condition, determine that the coverage hole exists between the first AP and the second AP. Signal strength before roaming of each terminal in the plurality of terminals includes: N pieces of signal strength that is of the terminal before the terminal is associated with the second AP in a process in which the terminal roams from the first AP to the second AP, and/or N pieces of signal strength that is of the terminal before the terminal is associated with the first AP in a process in which the terminal roams from the second AP to the first AP, where N is an integer greater than or equal to 1.

In a possible implementation, the second condition includes: a quantity of terminals whose signal strength before roaming is less than the signal strength threshold reaches the quantity threshold, and/or a proportion of a quantity of terminals whose signal strength before roaming is less than the signal strength threshold reaches the proportion threshold.

In a possible implementation, the processing unit is further configured to: determine, based on a roaming behavior of a terminal between a third AP and a fourth AP, that the coverage hole exists between the third AP and the fourth AP; and display a location of the coverage hole on a graphical user interface. The location of the coverage hole is a crosspoint of a connection line between the first AP and the second AP and a connection line between the third AP and the fourth AP.

It should be noted that, for beneficial effects of the third aspect, refer to the descriptions of the first aspect. Details are not described herein again.

According to a fourth aspect, this application provides a coverage hole detection apparatus. The apparatus has a function of implementing the behavior in the method example in the second aspect. The function may be implemented by hardware, or may be implemented by hardware executing corresponding software. The hardware or the software includes one or more modules corresponding to the foregoing function.

In a possible implementation, the apparatus includes an obtaining unit and a processing unit. The obtaining unit is configured to obtain a quantity of resident terminals of an AP and a quantity of weak-coverage terminals in the resident terminals. The processing unit is configured to determine, based on the quantity of resident terminals of the AP and the quantity of weak-coverage terminals in the resident terminals, whether the AP has a coverage hole. The resident terminal of the AP is a terminal whose duration of association with the AP is greater than a duration threshold. The weak-coverage terminal is a terminal that is associated with the AP and whose signal strength is less than a first signal strength threshold.

In a possible implementation, the processing unit is specifically configured to: when the quantity of weak-coverage terminals reaches a quantity threshold, determine that the AP has the coverage hole; and/or when a ratio of the quantity of weak-coverage terminals to the quantity of resident terminals reaches a proportion threshold, determine that the AP has the coverage hole.

In a possible implementation, the processing unit is further configured to: set a weight of each resident terminal based on duration of association between each resident terminal and the AP, and adjust the quantity of resident terminals based on the weight of each resident terminal.

It should be noted that, for beneficial effects of the fourth aspect, refer to the descriptions of the second aspect. Details are not described herein again.

According to a fifth aspect, this application provides an electronic device, including a processor and a memory. The memory is coupled to the processor and stores a program executed by the processor, where when the program is executed by the processor, the electronic device is enabled to perform the method in any one of the possible embodiments of the first aspect or the second aspect.

According to a sixth aspect, this application provides a computer-readable storage medium, where the computer-readable storage medium stores instructions, and when the instructions are executed by a processor, the method in any possible embodiment of the first aspect or the second aspect is implemented.

According to a seventh aspect, this application provides a computer program product, including a computer program. When the computer program is executed by a processor, the method in any possible embodiment of the first aspect or the second aspect is implemented.

**BRIEF DESCRIPTION OF DRAWINGS**

FIG. 1 is a schematic diagram of an application scenario according to an embodiment of this application;
FIG. 2 is a schematic diagram of another application scenario according to an embodiment of this application;
FIG. 3 is a schematic diagram of still another application scenario according to an embodiment of this application;
FIG. 4 is a schematic flowchart of a coverage hole detection method according to an embodiment of this application;
FIG. 5 is a schematic flowchart of a specific example of the coverage hole detection method shown in FIG. 4;
FIG. 6 is a schematic flowchart of a coverage hole detection method according to an embodiment of this application;

FIG. 7 is a schematic diagram of a roaming jump phenomenon according to an embodiment of this application;
FIG. 8 is a schematic diagram of an application procedure for detecting a coverage hole according to an embodiment of this application;
FIG. 9 is a schematic flowchart of recommending a coverage hole filling policy according to an embodiment of this application;
FIG. 10 is a schematic presentation diagram of a coverage hole of a building and a recommended location for coverage hole filling according to an embodiment of this application;
FIG. 11 is a schematic diagram of a structure of a coverage hole detection apparatus according to an embodiment of this application;
FIG. 12 is a schematic diagram of a structure of a coverage hole detection apparatus according to an embodiment of this application; and
FIG. 13 is a schematic diagram of a structure of an electronic device according to an embodiment of this application.

**DESCRIPTION OF EMBODIMENTS**

For ease of understanding this application by persons skilled in the art, the following describes technical solutions provided in this application with reference to the accompanying drawings.

Because a terminal in a coverage hole has a weak association signal, and user experience is poor, it is necessary to determine the coverage holes. Operation and maintenance personnel can perform targeted coverage hole filling based on the determined coverage hole to enhance signal coverage in a coverage hole area (for example, a new AP is added at a location of the coverage hole, or transmit power of an AP near the coverage hole is increased), to improve user experience. It may be understood that the coverage hole may be an area completely without signal coverage, or may be an area with weak signal coverage. The terminal cannot associate with an AP at the coverage hole, or is associated with an AP with poor signal quality.

In view of this, this application provides a coverage hole detection method and a related device. The coverage hole detection method may be performed by a plurality of electronic devices, for example, a WLAN controller, an analyzer, or an AP. The WLAN controller is, for example, an access controller (Access Controller, AC). The analyzer is, for example, a personal computer, a virtual machine, a server, or a cloud device. When the method is performed by the WLAN controller, the WLAN controller obtains terminal data (for example, signal strength of the terminal, a roaming behavior of the terminal, and association duration of the terminal) associated with each AP, and detects, based on the terminal data associated with each AP, whether each AP has a coverage hole or a coverage hole exists between APs. When the method is performed by the analyzer, the analyzer may independently obtain terminal data associated with each AP or obtain, via the WLAN controller, the terminal data associated with each AP, and detect, based on the terminal data associated with each AP, whether each AP has a coverage hole or a coverage hole exists between APs. When the method is performed by the AP, the AP may obtain terminal data associated with the AP and another AP, and detect, based on terminal data associated with each AP, whether each AP has a coverage hole or a coverage hole exists between APs.

Signal quality of a terminal associated with the AP can reflect coverage quality of the AP to some extent. However, some terminals are continuously associated with the AP (for example, duration in which the terminal is associated with the AP is greater than a duration threshold, that is, the terminal is a resident terminal), and some terminals may be only temporarily associated with the AP. For example, in an office of a manager, a terminal of the manager is continuously associated with an AP in the office, and a terminal of a person passing by outside the office is only temporarily associated with the AP. Signal quality of the terminal continuously associated with the AP can better reflect the coverage quality of the AP. When the AP has the coverage hole, signal quality of some resident terminals associated with the AP may be poor. Therefore, in this application, based on a resident terminal of the AP and a weak-coverage terminal in the resident terminal, the coverage hole of the AP can be detected, and the coverage hole detection is more accurate. The weak-coverage terminal is a terminal that is associated with the AP and whose signal strength is less than a signal strength threshold. For one AP, the electronic device analyzes a quantity and/or a proportion of weak-coverage terminals in resident terminals associated with the AP, and determines, based on the quantity and/or the proportion of weak-coverage terminals in the resident terminals, whether the AP has the coverage hole. For each AP in a wireless network, the electronic device may analyze a quantity and/or a proportion of weak-coverage terminals in resident terminals associated with each AP, and determine, based on the quantity and/or the proportion of weak-coverage terminals in the resident terminals associated with each AP, whether each AP has a coverage hole in the wireless network.

In addition, if the coverage hole exists between two APs, the terminal passes through the coverage hole when roaming between the two APs. Therefore, roaming behaviors of a plurality of terminals between the APs can reflect whether the coverage hole exists between the APs. Therefore, in this application, based on the roaming behaviors of the plurality of terminals between the two APs, whether the coverage hole exists between the two APs is detected. The roaming behavior is, for example, roaming handover duration or signal strength before roaming. The roaming handover duration indicates duration from a time point when the terminal leaves a first AP to a time point when the terminal is associated with a second AP. After the terminal leaves the first AP, when the terminal detects that signal strength of the second AP reaches some extent, the terminal is associated with the second AP. If the roaming handover duration exceeds specific duration, for example, reaches a threshold, it indicates that an area with weak signal coverage or without signal coverage exists between the first AP and the second AP. Consequently, after leaving the first AP, the terminal needs to wait for a long time period to reach a signal coverage area of the second AP to be associated with the second AP. The signal strength before roaming may be a statistical value of the last N (N>1) pieces of signal strength before the terminal leaves the first AP, for example, is the last one piece of signal strength, or an average value of the last plurality of pieces of signal strength.

Further, after it is detected that the AP has the coverage hole or the coverage hole exists between two APs, in this application, the location of the coverage hole may be further determined, and the location of the coverage hole is displayed, to clearly notify the operations and maintenance personnel of the location of the coverage hole, so that the operations and maintenance personnel can quickly locate the coverage hole, and adjust AP deployment in a timely manner to enhance network coverage. For example, the electronic device displays an identifier of the AP that has the coverage hole or a deployment location of the AP, to notify the operations and maintenance personnel that the AP has the coverage hole. The operations and maintenance personnel can increase transmit power of the AP or add a new AP in an area in which the AP is located, to enhance network coverage in the area. For another example, when the coverage hole exists between the first AP and the second AP, and the coverage hole also exists between a third AP and a fourth AP, the electronic device may determine an intersection of a connection line between the first AP and the second AP and a connection line between the third AP and the fourth AP as the location of the coverage hole, and display the location. The operations and maintenance personnel can enhance transmit power of a related AP or add a new AP at the location, to enhance network coverage in the area.

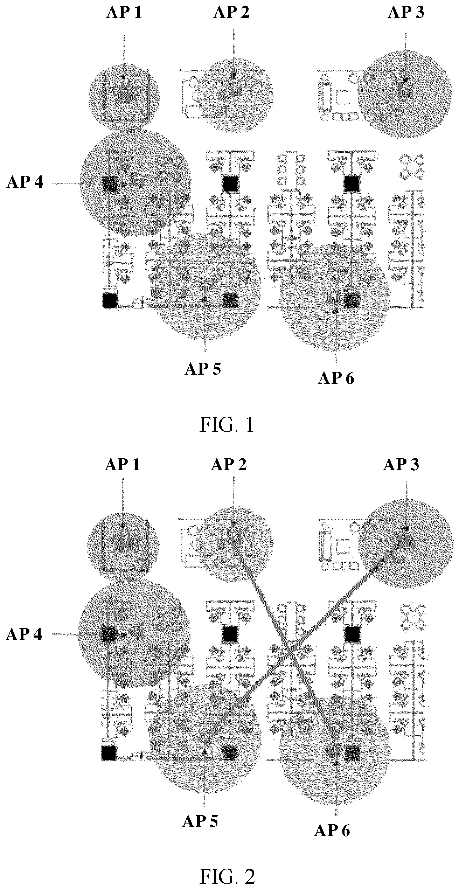

FIG. 1 to FIG. 3 are schematic diagrams of application scenarios according to embodiments of this application. The application scenarios shown in FIG. 1 to FIG. 3 are one office area, and one or more APs, for example, an AP 1 to an AP 6, are deployed in each sub-area of the office area. Based on the coverage hole detection method provided in this application, the electronic device may determine an AP or a roaming path that has a coverage hole in a wireless network in the office area. For example, the AP 1 has a coverage hole, a coverage hole exists between the AP 2 and the AP 6, and a coverage hole exists between the AP 3 and the AP 5. The operations and maintenance personnel can adjust AP deployment based on a detection result, to enhance signal coverage of the wireless network. For example, transmit power of the AP 1 is increased, to enhance a coverage area of the AP 1. For another example, a new AP is added between the AP 2 and the AP 6, to enhance signal coverage between the AP 2 and the AP 6.

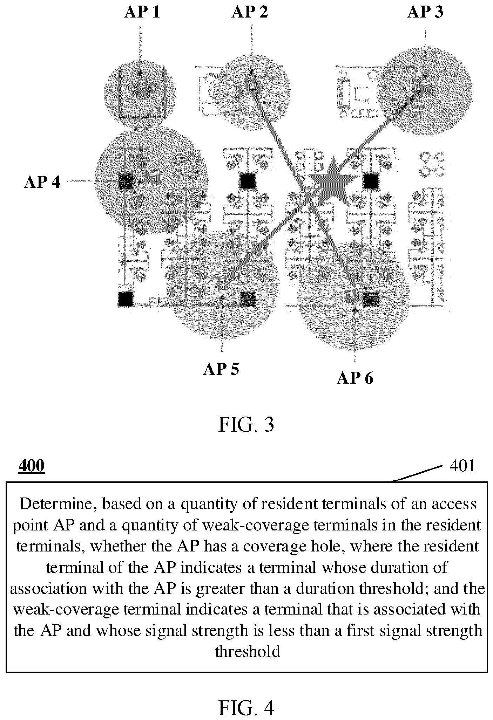

Further, after determining an area in which the coverage hole exists, the electronic device may further determine the location of the coverage hole. For example, the electronic device determines that an intersection (a location of a pentagonal star in FIG. 3) between a connection line between the AP 2 and the AP 6 and a connection line between the AP 3 and the AP 5 is the location of the coverage hole. The electronic device may display the location on a graphical interface. The operations and maintenance personnel may add a new AP at the location based on the display of the electronic device, to enhance signal coverage of the location.

The following describes the technical solutions provided in this application in detail with reference to specific implementations.

FIG. 4 is a schematic flowchart of a coverage hole detection method according to an embodiment of this application. The coverage hole detection method 400 may be performed by an electronic device (for example, a WLAN controller, an analyzer, or an AP), and is used to detect a coverage hole of an AP. The following describes an example in which the method is performed by the AP. The coverage hole detection method 400 includes but is not limited to the following steps or operations.

401: Determine, based on a quantity of resident terminals of the AP and a quantity of weak-coverage terminals in the resident terminals, whether the AP has the coverage hole. The resident terminal of the AP is a terminal whose duration of association with the AP is greater than a duration threshold. The weak-coverage terminal is a terminal that is associated with the AP and whose signal strength is less than a first signal strength threshold.

The AP may collect association data of terminals associated with the AP in a preset time period, and determine, based on association data of each terminal, the resident terminal of the AP and the weak-coverage terminal in the resident terminal.

The association data of the terminal includes a moment at which the terminal is associated with the AP (briefly referred to as an association moment below) and a moment at which the terminal is dissociated from the AP (briefly referred to as a disassociation moment below). The AP calculates one piece of association duration of the terminal based on one association moment of the terminal and a disassociation moment corresponding to the association moment.

In the preset time period, one terminal may be associated with the AP for a plurality of times, and correspondingly be disassociated from the AP for the plurality of times. For example, in one day, first, the terminal is associated with one AP in an office area, stays in a coverage area of the AP for a period of time, and then goes to another area, which means that the terminal is disassociated from the AP. Then, the terminal may return to the office area again, and the terminal is associated with the AP again. In this way, the terminal may be associated with the AP for the plurality of times, and correspondingly be disassociated from the AP for the plurality of times. The association data of the terminal includes a plurality of association moments and corresponding disassociation moments. The AP may calculate a plurality of pieces of association duration based on the plurality of association moments and the corresponding disassociation moments.

After obtaining the association duration of the terminal, the AP determines, based on the duration threshold, whether the terminal is the resident terminal of the AP. When the association duration of the terminal is greater than the duration threshold, the AP determines that the terminal is the resident terminal. When the terminal has only one piece of association duration, the AP may directly compare the association duration with the duration threshold, to determine whether the terminal is the resident terminal of the AP. When the terminal has the plurality of pieces of association duration, the AP may first calculate a statistical value of the plurality of pieces of association duration, and then compare the statistical value with the duration threshold. When the statistical value is greater than the duration threshold, the AP determines that the terminal is the resident terminal of the AP. The statistical value of the association duration is, for example, a maximum value or a quantile of the plurality of pieces of association duration.

The duration threshold may be a preset value, for example, 30 minutes. The duration threshold may alternatively be dynamically determined in another manner. For example, the duration threshold is determined based on distribution of association duration of a plurality of terminals. For example, the duration threshold is an average value of the association duration of the plurality of terminals. For another example, the duration threshold is determined as $\mu$-3$\sigma$ based on a 3sigma ($3\sigma$) criterion, where $\mu$ is an expectation of the association duration of the plurality of terminals, and $\sigma$ is a variance of the association duration of the plurality of terminals. The plurality of terminals may be terminals associated with the AP in the preset time period, or may be terminals that access, in the preset time period, a WLAN system to which the AP belongs.

It may be understood that the AP may set a plurality of duration thresholds, for example, a first duration threshold and a second duration threshold. Then, the AP compares the duration of association of the terminal with the AP in the preset time period with the plurality of duration thresholds, to determine the resident terminal of the AP. For example, when a first statistical value of the association duration of the terminal is greater than the first duration threshold, and a second statistical value of the association duration of the terminal is greater than the second duration threshold, the AP determines that the terminal is the resident terminal of the AP. The first statistical value is, for example, an average value, a median, a maximum value, or a quantile of the association duration, and the second statistical value is, for example, a sum of the association duration. Correspondingly, a method for determining the first duration threshold is similar to the foregoing method for determining the duration threshold. The second duration threshold may be a preset value, or may be determined based on the foregoing method for determining the duration threshold. For example, the second duration threshold may be an average value of a sum of association duration of the plurality of terminals.

The AP may obtain, in a plurality of manners, the association moment at which the terminal is associated with the AP. For example, when the terminal initiates a request for associating with the AP, the AP determines, based on an authentication result of the terminal and a resource (for example, a quantity of available internet protocol (Internet Protocol, IP) addresses) of the AP, whether the terminal can access the AP. When determining that the terminal can access the AP, the AP sends an acknowledgement message to the terminal, and the AP may use a moment at which the acknowledgement message is sent as the association moment of the terminal. It may be understood that the AP may alternatively use another moment as the association moment of the terminal. For example, the AP uses a moment at which the 1st data frame of the terminal is received after the foregoing acknowledgement message is sent as the association moment of the terminal. If the terminal is associated with the AP for the plurality of times in the preset time period, the AP may correspondingly obtain a plurality of association moments.

The AP may obtain, in a plurality of manners, the disassociation moment at which the terminal is disassociated from the AP. For example, when leaving a coverage area of the AP, the terminal may send a disassociation frame to the AP, and the AP may use a moment at which the disassociation frame is received as the disassociation moment. If the terminal is disassociated from the AP for the plurality of times in the preset time period, the AP may correspondingly obtain a plurality of disassociation moments. For another example, the AP may alternatively use a moment at which the last data frame sent by the terminal is received as the disassociation moment. When the terminal is associated with the AP for the plurality of times in the preset time period, after the terminal is associated with the AP for the $N^{th}$ time, the AP may use a moment at which the last data frame of the terminal is received before the terminal is associated with the AP for the $(N+1)^{th}$ time as the $N^{th}$ disassociation moment of the AP.

The AP may determine the resident terminal of the AP based on association duration of each terminal associated with the AP in the preset time period. The preset time period may be flexibly adjusted, for example, 24 hours before the coverage hole is detected, or one month before the coverage hole is detected.

After determining the resident terminal, the AP may further determine the weak-coverage terminal in the resident terminal. The weak-coverage terminal is a terminal that is associated with the AP and whose signal strength is less than the first signal strength threshold. Correspondingly, the association data of the terminal may further include signal strength of the terminal, for example, uplink signal strength and/or downlink signal strength. In a time period in which the terminal is associated with the AP, the terminal may continuously detect the downlink signal strength of the AP, and the AP may also continuously detect the uplink signal strength of the terminal. The terminal may periodically send the downlink signal strength, for example, a downlink received signal strength indication (Received Signal Strength Indication, RSSI) value, to the AP. The AP may also periodically detect the uplink signal strength of the terminal, for example, an uplink RSSI value. In other words, in a time period in which the terminal is associated with the AP each time, the AP may obtain a plurality of pieces of downlink signal strength and a plurality of pieces of uplink signal strength.

The AP may determine, based on the signal strength of each terminal in the resident terminal and the first signal strength threshold, whether each terminal is the weak-coverage terminal. For example, the AP calculates a signal strength statistical value of the terminal based on a plurality of pieces of signal strength of the terminal in the preset time period, and compares the signal strength statistical value with the first signal strength threshold. When the signal strength statistical value is less than the first signal strength threshold, the AP determines that the resident terminal is the weak-coverage terminal. The signal strength statistical value is, for example, an uplink signal strength statistical value, for example, an average value, a median, or a quantile. The signal strength statistical value is, for example, a downlink signal strength statistical value, for example, an average value, a median, or a quantile. The signal strength statistical value is, for example, a weighted average value of the uplink signal strength statistical value and the downlink signal strength. For another example, the AP calculates one signal strength statistical value for each association time period of the terminal, and when the terminal is associated with the AP for the plurality of times, the AP calculates a plurality of signal strength statistical values for the terminal. When a quantity of statistical values that are in the plurality of signal strength statistical values and that are less than the first signal strength threshold exceeds a first quantity threshold, the AP determines that the terminal is the weak-coverage terminal. Alternatively, when a proportion of signal strength statistical values less than the first signal strength threshold exceeds a first proportion threshold, the AP determines that the terminal is the weak-coverage terminal. Alternatively, when both the foregoing two conditions are met, the AP determines that the terminal is the weak-coverage terminal. The first signal strength threshold, the first quantity threshold, and the first proportion threshold may all be preset values, or may be obtained based on a method similar to the method for determining the duration threshold.

For another example, the AP calculates one signal strength statistical value for each association time period of the terminal, and when the signal strength statistical value is less than the first signal strength threshold, the AP determines one weak-coverage terminal. When the terminal is associated with the AP for N times, and M of N signal strength statistical values are all less than the first signal strength threshold, the AP determines M weak-coverage terminals. Correspondingly, the AP adjusts one resident terminal to N resident terminals. That is, the AP enables the resident terminal to correspond to the N resident terminals, and determines M of the N resident terminals as the M weak-coverage terminals.

For another example, the AP collects statistics on a signal strength statistical value of each resident terminal based on a specified duration granularity, for example, half an hour. For example, the preset time period is 24 hours, and the duration granularity is half an hour. The AP divides the preset time period into 48 statistical time periods. If one resident terminal is associated with the AP in a statistical time period, the AP calculates one signal strength statistical value for the terminal. If the signal strength statistical value is less than the first signal strength threshold, the AP determines one weak-coverage terminal. For example, if one resident terminal is associated with the AP at 9:15-10:00 and 14:30-15:40, the resident terminal corresponds to five statistical time periods (9:00-9:30, 9:30-10:00, 14:30-15:00, 15:00-15:30, and 15:30-16:00). The AP collects statistics on respective signal strength statistical values of the resident terminal in the five statistical time periods. If a signal strength statistical value in a statistical time period is less than the first signal strength threshold, the AP determines one weak-coverage terminal. For example, if signal strength statistical values in three of the five statistical time periods are less than the first signal strength threshold, the AP determines three weak-coverage terminals. Correspondingly, the AP adjusts, based on the duration of association between the resident terminal and the AP, the quantity, of resident terminals, corresponding to the resident terminal, for example, adjusts the quantity of resident terminals from 1 to 5 (corresponding to the five statistical time periods). When the AP has a plurality of resident terminals, the AP determines a quantity of weak-coverage terminals for each resident terminal based on statistical time periods, and accumulates quantities of weak-coverage terminals of the resident terminals, to obtain the quantity of weak-coverage terminals of the AP in the preset time period. Correspondingly, the AP sets a weight of each resident terminal based on duration of association between each resident terminal and the AP, adjusts, based on the weight of each resident terminal, a quantity of resident terminals corresponding to each resident terminal, and then accumulates quantities of resident terminals corresponding to the resident terminals to obtain a quantity of resident terminals of the AP. For example, the AP has two resident terminals, association duration of a resident terminal 1 corresponds to five statistical time periods, and association duration of a resident terminal 2 corresponds to six statistical time periods. In this case, the AP sets a weight of the resident terminal 1 to 5, sets a weight of the resident terminal 2 to 6, and obtains that the quantity of resident terminals of the AP is 5+6=11. If signal strength statistical values in three of the five statistical time periods of the resident terminal 1 are less than the first signal strength threshold, and signal strength statistical values in two of the six statistical time periods of the resident terminal 2 are less than the first signal strength threshold, the AP determines that the quantity of weak-coverage terminals of the AP is 3+2=5. Signal coverage quality of a terminal with long association duration can better reflect coverage quality of the AP. The AP sets a weight of each resident terminal based on the association duration of each resident terminal, to adjust the quantity of resident terminals, so that coverage hole detection is more accurate.

Based on the foregoing method, the AP may determine the quantity of resident terminals of the AP and the quantity of weak-coverage terminals in the resident terminals in the preset time period.

It should be understood that the duration thresholds and the first signal strength threshold may be related to an actual network use scenario, and are dynamic thresholds. For example, different duration thresholds and first signal strength thresholds may be preset for different network use scenarios. For another example, the foregoing $3\sigma$ model is used as an example. Because data distribution expectations $\mu$ and variances $\sigma$ corresponding to different network usage scenarios are different, thresholds $\mu - 3_6$ are different, in other words, the thresholds are dynamically adjusted.

In embodiments of this application, for any terminal associated with an AP, if duration of association between the terminal and the AP is greater than a duration threshold, it indicates that the terminal is a resident terminal of the AP. Signal quality of the resident terminal can better reflect coverage quality of the AP. Therefore, in this application, whether the AP has a coverage hole is determined based on a quantity of weak-coverage terminals in resident terminals. In this way, coverage hole detection for the AP is implemented, and the coverage hole detection is more accurate.

In a possible implementation, determining, based on the quantity of resident terminals of the AP and the quantity of weak-coverage terminals in the resident terminals, whether the AP has the coverage hole includes: when the quantity of weak-coverage terminals reaches a second quantity threshold, determining that the AP has the coverage hole; or when a ratio of the quantity of weak-coverage terminals to the quantity of resident terminals reaches a second proportion threshold, determining that the AP has the coverage hole; or when the quantity of weak-coverage terminals reaches a second quantity threshold, and a ratio of the quantity of weak-coverage terminals to the quantity of resident terminals reaches a second proportion threshold, determine that the AP has the coverage hole.

In a possible implementation, the second quantity threshold and the second proportion threshold are determined based on the quantity of resident terminals of the AP. In other words, the second quantity threshold and the second proportion threshold are dynamically adjusted based on the quantity of resident terminals of the AP. For example, a value of the second quantity threshold is dynamically adjusted based on the quantity of resident terminals of the AP, and a value of the second proportion threshold is dynamically adjusted based on the quantity of resident terminals of the AP.

A quantity of resident terminals of different APs may vary greatly. Therefore, different coverage hole determining conditions may be set based on the quantity of resident terminals of the AP. For example, if the quantity of resident terminals is small, when a proportion of weak-coverage terminals exceeds a large proportion threshold, it is determined that the AP has the coverage hole; if the quantity of resident terminals is large, when the quantity of weak-coverage terminals exceeds a specified value, it is determined that the AP has the coverage hole; or if the quantity of resident terminals is normal, when a proportion of weak-coverage terminals exceeds a small proportion threshold, it is determined that the AP has the coverage hole. In an example, the second proportion threshold includes a proportion threshold a and a proportion threshold b, and the determining, based on the quantity of resident terminals of the AP and the quantity of weak-coverage terminals in the resident terminals, whether the AP has the coverage hole includes: when the quantity of resident terminals is less than a third quantity threshold, and the ratio of the quantity of weak-coverage terminals to the quantity of resident terminals is greater than or equal to the proportion threshold a, determining that the AP has the coverage hole; when the quantity of resident terminals is greater than or equal to a third quantity threshold and is less than or equal to a fourth quantity threshold, and the ratio of the quantity of weak-coverage terminals to the quantity of resident terminals is greater than or equal to the proportion threshold b, determining that the AP has the coverage hole; or when the quantity of resident terminals is greater than a fourth quantity threshold and the quantity of weak-coverage terminals reaches a fifth quantity threshold, determining that the AP has the coverage hole. For example, evaluation standards are shown in the following formula:

$$\begin{cases} P(a) = 100\%, & N < 3 \\ P(b) = 60\%, & 3 \leq N \leq 10 \\ R = 7, & N > 10 \end{cases}$$

In the foregoing formula, N represents the quantity of resident terminals, the third quantity threshold is 3, the fourth quantity threshold is 10, P(a) represents the proportion threshold a, P(b) represents the proportion threshold b, and R represents the fifth quantity threshold.

It should be understood that purposes of the foregoing evaluation standards are as follows: When the quantity of resident terminals is small, it is considered that the AP has the coverage hole only when all the resident terminals are weak-coverage terminals. When the quantity of resident terminals is normal, a proportion of the quantity of weak-coverage terminals to the quantity of resident terminals is used for evaluation, that is, a normal proportion threshold is used for evaluation. When the quantity of resident terminals is large, if some resident terminals are weak-coverage terminals, the proportion of these terminals may be small. Therefore, the quantity of weak-coverage terminals is used for evaluation, that is, the fifth quantity threshold is used for evaluation.

It should be noted that the foregoing quantity thresholds and proportion thresholds may be related to an actual network use scenario, and are dynamic thresholds. That is, N, P(a), P(b), and R in the foregoing formula may be dynamically adjusted. For details, refer to the foregoing descriptions of the duration thresholds and the first signal strength threshold. Details are not described herein again.

In this embodiment, whether the AP has the coverage hole is detected based on the quantity of resident terminals of the AP and the quantity of weak-coverage terminals in the resident terminals. Because the duration in which the resident terminal is associated with the AP exceeds the duration threshold, the signal quality of the resident terminal can better reflect the coverage quality of the AP. Therefore, in embodiments of this application, accuracy of detecting the coverage hole of the AP is improved.

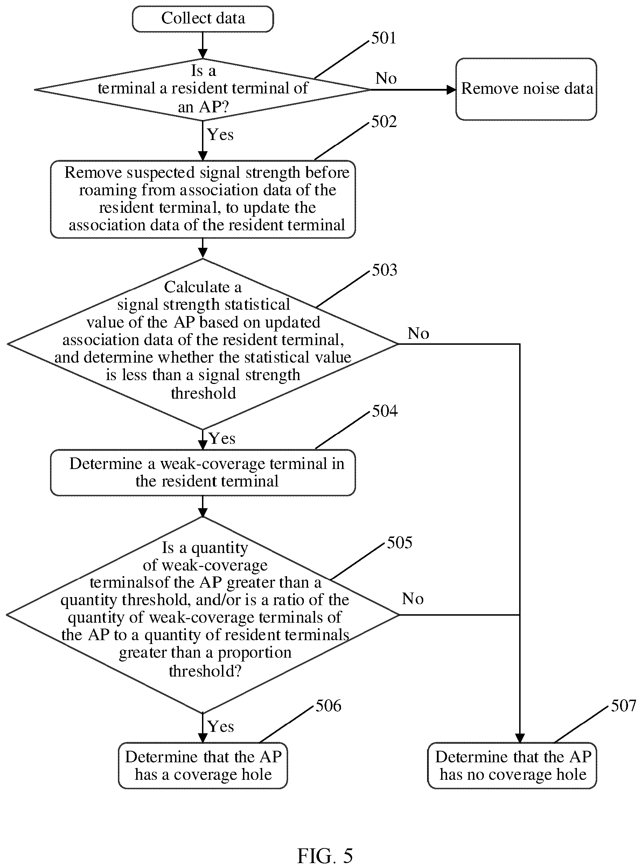

FIG. 5 is a schematic flowchart of a specific example of the coverage hole detection method shown in FIG. 4. The coverage hole detection method may be performed by an electronic device (for example, a WLAN controller, an analyzer, or an AP), and is used to detect a coverage hole of an AP. The coverage hole detection method includes but is not limited to the following steps or operations:

501: Determine whether a terminal is a resident terminal of the AP.

In an example, before performing step 501, the electronic device first collects association data of each terminal in all terminals associated with the AP, and then determines, based on the association data of each terminal, whether the terminal is the resident terminal of the AP. For a specific determining method, refer to the foregoing step 401. For a non-resident terminal, association data of the non-resident terminal is noise data and needs to be removed. The association data of the non-resident terminals is not be considered in subsequent steps. For the resident terminal, step 502 is performed.

In another example, in a fixed network use scenario, for example, an office and a dormitory, a terminal served by each AP is fixed. For the resident terminal that has been determined previously, the electronic device may store related information of the resident terminal, for example, store a media access control (Media Access Control, MAC) address of the resident terminal in a data table. In this way, the electronic device may query the data table to determine whether a terminal is the resident terminal. For example, a MAC address of the terminal is compared with the MAC address of the resident terminal in the data table. If a MAC address that is the same as the MAC address of the terminal exists in the data table, the terminal is the resident terminal.

It should be understood that, after step 501, all reserved association data is association data of the resident terminal of the AP.

502: Update the association data of the resident terminal.

Optionally, before performing a subsequent step, the AP may further update the association data of the resident terminal. For example, the AP removes suspected signal strength before roaming from the association data of the resident terminal. After being associated with the AP, the terminal may move to roam to another AP. Before accessing the another AP, the terminal is on a roaming path and may still be associated with the AP. In this case, signal strength of the terminal is weak. Optionally, in this application, the suspected signal strength before roaming in the association data of the terminal may be removed, so that updated association data can better reflect coverage quality of the AP. For example, the AP deletes the last several (for example, three) pieces of signal strength after each resident terminal is associated with the AP each time. The updated association data of the resident terminal is used in subsequent steps.

503: Determine whether signal strength of the AP is less than a signal strength threshold.

Optionally, before whether the AP has the coverage hole is determined based on a quantity or proportion of weak-coverage terminals in resident terminals, statistics on the signal strength of the AP may be further collected first, and whether the signal strength of the AP is less than the signal strength threshold is determined. If the signal strength of the AP is not less than the signal strength threshold, it is determined that overall coverage quality of the AP is good, and step 507 may be performed to determine that the AP has no coverage hole. If the signal strength of the AP is less than the signal strength threshold, step 504 is performed. The signal strength of the AP is a statistical value of signal strength of the resident terminal of the AP, for example, is an average value of downlink signal strength detected by the resident terminal.

504: Determine the weak-coverage terminal in the resident terminal.

For this step, refer to step 401. Details are not described herein again.

505: Determine, based on the quantity or proportion of weak-coverage terminals in the resident terminals, whether the AP has the coverage hole.

After determining the resident terminals and the weak-coverage terminals in the resident terminals, the AP may determine, based on the quantity or proportion of the weak-coverage terminals in the resident terminals, whether the AP has the coverage hole. The proportion is a ratio of the quantity of weak-coverage terminals in the resident terminals of the AP to a quantity of resident terminals associated with the AP.

Specifically, if the quantity of weak-coverage terminals in the resident terminals of the AP is greater than a quantity threshold, the proportion of weak-coverage terminals in the resident terminals of the AP is greater than a proportion threshold, or the quantity of weak-coverage terminals in the resident terminals of the AP is greater than a quantity threshold and the proportion of weak-coverage terminals in the resident terminals of the AP is greater than a proportion threshold, step 506 is performed to determine that the AP has the coverage hole. Otherwise, step 507 is performed to determine that the AP has no coverage hole.

506: Determine that the AP is an AP that has a coverage hole.

Step 507 is not performed.

507: Determine that the AP is an AP that has no coverage hole.

It should be noted that step 502 and step 503 are optional steps.

It should be further noted that, for a series of steps or operations described in FIG. 5, refer to corresponding descriptions in the embodiment shown in FIG. 4.

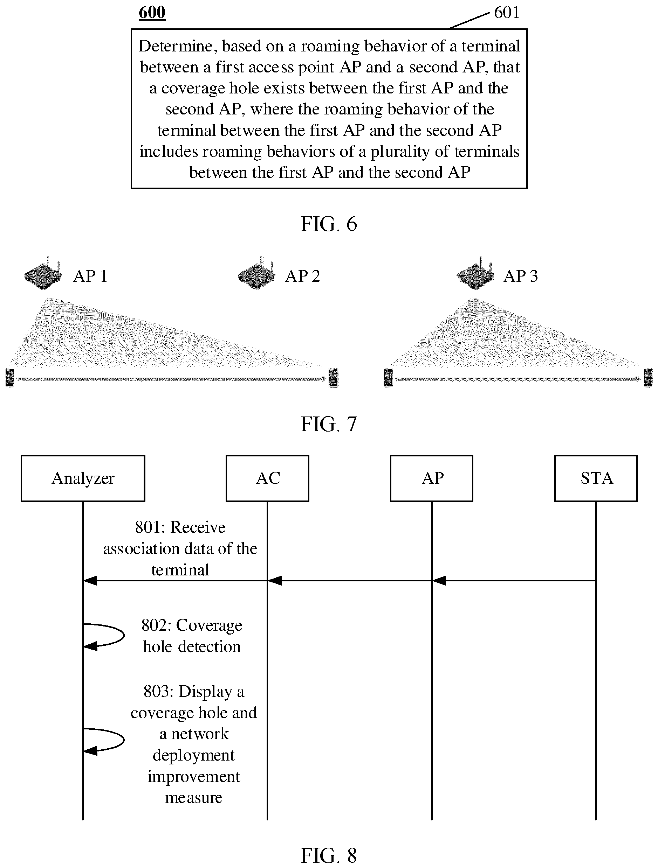

FIG. 6 is a schematic flowchart of a coverage hole detection method according to an embodiment of this application. The coverage hole detection method 600 may be performed by an electronic device (for example, a WLAN controller, an analyzer, or an AP), and is used to detect a coverage hole between APs. The coverage hole detection method 600 includes but is not limited to the following steps or operations.

601: Determine, based on a roaming behavior of a terminal between a first AP and a second AP, that a coverage hole exists between the first AP and the second AP. The roaming behavior of the terminal between the first AP and the second AP includes roaming behaviors of a plurality of terminals between the first AP and the second AP.

Each AP in a wireless network may collect association data of a terminal associated with the AP. The association data of the terminal includes, for example, an identifier of the terminal (for example, a MAC address of the terminal), an identifier of the associated AP (for example, a name of the AP), signal strength of the terminal, an association moment of the terminal, and a disassociation moment of the terminal. For a specific manner of obtaining the association data, refer to the foregoing step 401. Details are not described herein again.

It should be understood that the electronic device may be the first AP, the second AP, or another device. If the electronic device is the first AP, another AP in the wireless network may send, to the first AP, collected association data of a terminal associated with the another AP. If the electronic device is the second AP, another AP in the wireless network may send, to the second AP, collected association data of a terminal associated with the another AP. If the electronic device is the another device, each AP may send, to the another device, collected association data of a terminal associated with each AP. Therefore, the electronic device may obtain the association data of the terminal associated with each AP that is in the wireless network. The electronic device may determine, based on the association data of the terminal associated with each AP, the roaming behavior of the terminal between the first AP and the second AP, and determine, based on the roaming behavior of the terminal between the first AP and the second AP, whether the coverage hole exists between the first AP and the second AP.

For example, the electronic device may use any two APs in the wireless network as the first AP and the second AP, to determine a plurality of first AP and second AP pairs, and then determine whether a coverage hole exists between each first AP and second AP pair. For each first AP and second AP pair, the electronic device may use, as a roaming terminal between the first AP and the second AP, a terminal that is not associated with another AP in the wireless network after the terminal leaves the first AP in a preset time period and before the terminal is associated with the second AP. Correspondingly, the electronic device may further use, as a roaming terminal between the first AP and the second AP, a terminal that is not associated with another AP in the wireless network after the terminal leaves the second AP in the preset time period and before the terminal is associated with the first AP. Therefore, the electronic device obtains the plurality of terminals that roam between the first AP and the second AP. The preset time period may be a specified time period, for example, 24 hours or one month before the coverage hole is detected.

For any first AP and second AP pair, the electronic device may obtain association data of a plurality of terminals associated with such a first AP and association data of a plurality of terminals associated with such a second AP, and determine roaming behaviors of the plurality of terminals between the first AP and the second AP based on the association data of the plurality of terminals associated with the first AP and the association data of the plurality of terminals associated with the second AP. Further, the electronic device determines, based on the roaming behaviors of the plurality of terminals between the first AP and the second AP, whether the coverage hole exists between the first AP and the second AP.

In embodiments of this application, the roaming behavior of the terminal between the APs can reflect signal coverage quality between the APs. Therefore, in this solution, detection of the coverage hole between the two APs can be implemented based on the roaming behaviors of the plurality of terminals between the two APs.

In a possible implementation, the determining, based on a roaming behavior of a terminal between a first AP and a second AP, that a coverage hole exists between the first AP and the second AP includes: obtaining roaming handover duration of the plurality of terminals, and when the roaming handover duration of the plurality of terminals meets a first condition, determining that the coverage hole exists between the first AP and the second AP. Roaming handover duration of each terminal in the plurality of terminals indicates: duration from a time point when the terminal leaves the first AP to a time point when the terminal is associated with the second AP, or duration from a time point when the terminal leaves the second AP to a time point when the terminal is associated with the first AP.

That the terminal leaves an AP includes: The terminal is dissociated from the AP, or signal strength of the AP associated with the terminal is less than a second signal strength threshold. In an actual scenario, in a roaming process, a terminal first sends a disassociation request to an associated AP to disassociate from the AP, and after disassociating from the AP, the terminal attempts to associate with a new AP. In this case, disassociation between the terminal and the associated AP means that the terminal leaves the AP. In an actual scenario, in a roaming process, a terminal does not send a disassociation request to an associated AP. However, as the terminal roams, signal strength of the AP associated with the terminal is weaker. Therefore, when the signal strength of the AP associated with the terminal is less than the second signal strength threshold, it is determined that the terminal leaves the AP. A signal of the AP associated with the terminal may fluctuate, and signal strength in the fluctuation may be less than the second signal strength threshold, but the fluctuation may not be caused by roaming. Therefore, further, to improve coverage hole detection accuracy, when one piece of signal strength of the AP associated with the terminal is less than the second signal strength threshold, and pieces of signal strength after the signal strength are all less than the second signal strength threshold, it is determined that the terminal leaves the AP.

One roaming process is that association of a terminal with one AP in the wireless network is switched to association between the terminal with another AP in the wireless network, and roaming handover duration corresponding to the terminal is equal to a difference between an association time point at which the terminal is associated with the another AP and a time point at which the terminal leaves the AP. The another AP may be referred to as a new AP associated with the terminal, and the AP may be referred to as an old AP associated with the terminal. That is, the roaming handover duration of the terminal is a difference between an association moment at which the terminal is associated with the new AP and a moment at which the terminal leaves the old AP. The moment at which the terminal leaves the old AP may be a moment at which the terminal is disassociated from the old AP or a moment at which signal strength of the terminal associated with the old AP is less than the second signal strength threshold. Association data that is of one terminal and that is obtained by each AP includes an association moment of the terminal, a disassociation moment of the terminal, a plurality of pieces of signal strength of the terminal associated with the AP, and a moment corresponding to each piece of signal strength. For a specific manner of obtaining the association moment, the disassociation moment, and the signal strength of the terminal, refer to step 401. Details are not described herein again. The electronic device may extract a disassociation moment of the terminal from association data of the terminal in the old AP, and use the disassociation moment as the moment at which the terminal leaves the old AP. Alternatively, the electronic device may extract, from association data of the terminal in the old AP, signal strength less than the second signal strength threshold, and use a moment corresponding to the signal strength as the moment at which the terminal leaves the old AP. The electronic device may extract the association moment of the terminal from association data of the terminal in the new AP. The electronic device calculates a difference between the association moment at which the terminal is associated with the new AP and the moment at which the terminal leaves the old AP, and uses the difference as roaming duration of the terminal between the old AP and the new AP.

For example, the electronic device determines, based on the association data of the plurality of terminals associated with the first AP and the association data of the plurality of terminals associated with the second AP, roaming handover duration of the plurality of terminals that roam between the first AP and the second AP. One terminal may correspond to a plurality of pieces of roaming handover duration. For example, if one terminal roams from the first AP to the second AP for a plurality of times in the preset time period, each roaming process of the terminal corresponds to one roaming handover duration. For another example, if one terminal roams from the first AP to the second AP for a plurality of times in the preset time period, and then roams from the second AP to the first AP for a plurality of times, each roaming process of the terminal corresponds to one roaming handover duration. That is, roaming handover duration of any terminal in the plurality of terminals includes: roaming handover duration in which the any terminal roams from the first AP to the second AP, and/or roaming handover duration in which the any terminal roams from the second AP to the first AP.

In this implementation, when the plurality of terminals have the roaming behaviors between the first AP and the second AP, the roaming handover duration of the plurality of terminals may be obtained. When the roaming handover duration of the plurality of terminals meets the first condition, it indicates that roaming experience of the terminals between the first AP and the second AP is poor, to determine that the coverage hole exists between the first AP and the second AP.

In a possible implementation, the first condition includes: a quantity of terminals whose roaming handover duration reaches a third duration threshold reaches a sixth quantity threshold, and/or a proportion of the quantity of terminals whose roaming handover duration reaches the third duration threshold reaches a third proportion threshold. That is, when a quantity of terminals whose handover duration of roaming between the first AP and the second AP reaches the third duration threshold reaches the sixth quantity threshold, it is determined that the coverage hole exists between the first AP and the second AP. Alternatively, when the proportion of the quantity of terminals whose handover duration of roaming between the first AP and the second AP reaches the third duration threshold reaches the third proportion threshold, it is determined that the coverage hole exists between the first AP and the second AP. The proportion is a ratio of the quantity of terminals whose roaming handover duration reaches the third duration threshold to a quantity of terminals roaming between the first AP and the second AP. Alternatively, when the quantity of terminals whose handover duration of roaming between the first AP and the second AP reaches the third duration threshold reaches the sixth quantity threshold, and the proportion of the quantity of terminals whose handover duration of roaming between the first AP and the second AP reaches the third duration threshold reaches the third proportion threshold, it is determined that the coverage hole exists between the first AP and the second AP.

It may be understood that, a terminal may roam between the first AP and the second AP for a plurality of times, and each roaming corresponds to one roaming handover duration. Therefore, one terminal may correspond to a plurality of pieces of roaming handover duration. Each roaming handover duration can be used as a sample for collecting statistics on the quantity of terminals. For example, a terminal 1 and a terminal 2 roam between the first AP and the second AP for 1000 times in total, where a quantity of times that roaming handover duration of the terminal 1 reaches the third duration threshold is 200, and a quantity of times that roaming handover duration of the terminal 2 reaches the third duration threshold is 300. Therefore, during the foregoing statistics collection, it is determined that the quantity of terminals roaming between the first AP and the second AP is 1000, and the quantity of terminals whose handover duration of roaming between the first AP and the second AP reaches the third duration threshold is 500.

The second signal strength threshold, the third duration threshold, the sixth quantity threshold, and the third proportion threshold may be preset values. The preset values may be related to an actual network use scenario. For example, different values are set for different scenarios. These preset values may alternatively be dynamic thresholds that are automatically adjusted based on detected data in the wireless network. For example, the third duration threshold may be determined based on distribution of all roaming handover duration data in the wireless network. For example, the third duration threshold is an average value, a median, and the like of all roaming handover duration in the wireless network. For another example, the third duration threshold is determined based on a 3sigma criterion. A $3\sigma$ model is used as an example, an expectation $\mu$ and a variance $\sigma$ of the roaming handover duration data distribution are determined based on historical roaming handover duration data, and the third duration threshold is set to $\mu - 3\sigma$. Similarly, the sixth quantity threshold and the third proportion threshold may be dynamically determined based on data collected in the wireless network.

Optionally, when it is detected whether the coverage hole exists between the first AP and the second AP, a total quantity of times of roaming between the first AP and the second AP may be further determined. If the total quantity of times of roaming between the first AP and the second AP is not greater than a fourth quantity threshold, it indicates that there is a small quantity of data samples, and whether the coverage hole exists between the first AP and the second AP is no longer determined.

In this implementation, if the roaming handover duration that meets a quantity requirement or a proportion requirement reaches a handover duration threshold, it indicates that roaming experience of the terminal between the first AP and the second AP is poor, to determine that the coverage hole exists between the first AP and the second AP.

The foregoing uses an example in which the roaming behavior is the roaming handover duration to describe a method that the electronic device determines, based on the roaming behavior, that the coverage hole exists between APs. The roaming behavior may alternatively be signal strength before roaming. In this case, the electronic device obtains signal strength before roaming of the plurality of terminals that roam between the first AP and the second AP, and when the signal strength before roaming of the plurality of terminals meets a second condition, determines that the coverage hole exists between the first AP and the second AP. The second condition includes: A quantity of terminals whose signal strength before roaming is less than a signal strength threshold reaches a quantity threshold, and/or a proportion of the quantity of terminals whose signal strength before roaming is less than the signal strength threshold reaches a proportion threshold.

Signal strength before roaming of each terminal includes: N pieces of signal strength that is of the terminal before the terminal is associated with the second AP in a process in which the terminal roams from the first AP to the second AP, and/or N pieces of signal strength that is of the terminal before the terminal is associated with the first AP in a process in which the terminal roams from the second AP to the first AP, where N is an integer greater than or equal to 1.

One terminal may roam between the first AP and the second AP for a plurality of times, and the electronic device may obtain signal strength that is of each terminal before each roaming, for example, obtain the last N pieces of signal strength that is of the terminal before each roaming, where N is an integer greater than or equal to 1. The electronic device may collect statistics on a quantity of roaming terminals based on a quantity of roaming times. For example, if the electronic device detects, in the preset time period, that the plurality of terminals roam between the first AP and the second AP for K times in total, the quantity of roaming terminals is set to K. The electronic device compares the signal strength before roaming corresponding to each roaming with the signal strength threshold, and collects statistics on the quantity of terminals whose signal strength before roaming is less than the signal strength threshold. Then, the electronic device compares the quantity with the quantity threshold. If the quantity is greater than or equal to the quantity threshold, the electronic device determines that the signal strength before roaming of the plurality of terminals meets the second condition, and determines that the coverage hole exists between the first AP and the second AP. Alternatively, the electronic device compares the ratio of the quantity to the quantity of roaming terminals with the proportion threshold, and if the ratio is greater than or equal to the proportion threshold, the electronic device determines that the signal strength before roaming of the plurality of terminals meets the second condition, and determines that the coverage hole exists between the first AP and the second AP. Alternatively, when the quantity is greater than or equal to the quantity threshold, and the ratio is greater than or equal to the proportion threshold, the electronic device determines that the signal strength before roaming of the plurality of terminals meets the second condition, and determines that the coverage hole exists between the first AP and the second AP. For example, it is assumed that signal strength before roaming corresponding to L of the K times of roaming is less than the signal strength threshold. When L is greater than or equal to the quantity threshold, and/or L/K is greater than the proportion threshold, the electronic device determines that the coverage hole exists between the first AP and the second AP.

When N=1, the electronic device may directly compare one piece of signal strength before roaming corresponding to each roaming with the signal strength threshold. When N>1, the electronic device may calculate a statistical value of N pieces of signal strength before roaming corresponding to each roaming, and then compare the statistical value with the signal strength threshold. The statistical value is, for example, an average value or a median.

The electronic device may obtain signal strength that is of a terminal associated with each AP and that is detected by each AP. When the terminal roams from the first AP to the second AP, the electronic device obtains the last N pieces of signal strength that are of the terminal when the terminal is associated with the first AP before the terminal is associated with the second AP. When the terminal roams from the second AP to the first AP, the electronic device obtains the last N pieces of signal strength that are of the terminal when the terminal is associated with the second AP before the terminal is associated with the first AP. The signal strength threshold may be a preset value, for example, -65 dB. The signal strength may alternatively be dynamically determined, for example, determined based on distribution of signal strength before roaming between all APs in a WLAN system in which the first AP and the second AP are located. For example, the signal strength threshold is a quantile of the signal strength before roaming between all the APs in the WLAN system, or determined according to the foregoing 3 sigma principle. The quantity threshold and the proportion threshold may be preset, or may be dynamically determined. For example, after the signal strength threshold is determined based on the signal strength before roaming between all the APs in the WLAN system, statistics on a quantity and a ratio of terminals whose signal strength before roaming is greater than the signal strength threshold in the WLAN system may be collected, and the quantity threshold and the proportion threshold are determined based on the collected quantity and ratio.

The roaming behavior may alternatively include the roaming handover duration and the signal strength before roaming. In this case, when the roaming handover duration of the plurality of terminals between the first AP and the second AP meets the first condition, and the signal strength before roaming of the plurality of terminals between the first AP and the second AP meets the second condition, the electronic device determines that the coverage hole exists between the first AP and the second AP.

According to the foregoing method, the electronic device may determine whether the coverage hole exists between other APs in the wireless network, for example, determine, based on a roaming behavior of a terminal between a third AP and a fourth AP, that the coverage hole exists between the third AP and the fourth AP. After determining an AP pair in which the coverage hole exists on a roaming path in the wireless network, the electronic device may further determine a location of the coverage hole, and display the location of the coverage hole. The location of the coverage hole is a crosspoint of a connection line between the first AP and the second AP and a connection line between the third AP and the fourth AP.

For example, based on a map of a network use scenario, the first AP, the second AP, the third AP, and the fourth AP are all located at corresponding locations of the map. When the crosspoint exists between the connection line between coordinates of the first AP and coordinates of the second AP and the connection line between coordinates of the third AP and coordinates of the fourth AP, the coverage hole exists between the first AP and the second AP, and the coverage hole also exists between the third AP and the fourth AP, it may be determined that the crosspoint is the location of the coverage hole.

It should be noted that a connection line between APs includes a straight line, a curve line, and the like. This is not specifically limited in this application. For example, in an open indoor area, a connection line between any two APs may be a straight line. For another example, there are various corridors in a building, a connection line between APs may be bent along a corridor, and a boundary of two connection lines may be a crosspoint of two corridors. In addition, the crosspoint between the connection lines is located between the first AP and the second AP, located between the third AP and the fourth AP, and is not a crosspoint on extension lines of the connection line between the first AP and the second AP and the connection line between the third AP and the fourth AP.

In this implementation, the electronic device determines the location of the coverage hole based on a crosspoint between AP pairs that have the coverage hole, and displays the location of the coverage hole, so that operations and maintenance personnel can quickly know the location of the coverage hole, adjust deployment, enhance signal coverage in such an area, and improve user experience.

A roaming jump phenomenon may occur in a process in which the terminal roams. The roaming jump phenomenon refers to a phenomenon that the terminal does not roam in a timely manner and cannot implement hop-by-hop roaming. For example, FIG. 7 is a schematic diagram of a roaming jump phenomenon according to an embodiment of this application. As shown in FIG. 7, a terminal is initially associated with an AP 1. As the terminal moves away from the AP 1 and approaches an AP 2, theoretically, the terminal is to be disassociated from the AP 1 and then is associated with the AP 2. That is, theoretically, the terminal is to roam on a roaming path AP 1 4 AP 2. However, actually, the terminal is not disassociated from the AP 1 in a timely manner and is not associated with the AP 2. When the terminal is disassociated from the AP 1, the terminal is already associated with an AP 3. That is, actually, the terminal roams on a roaming path AP 1 4 AP 3, and the AP 2 is jumped in the roaming. A cause of the roaming jump may be that a terminal does not scan the AP 2 on the roaming path in a timely manner because a scanning interval of the terminal is large. Therefore, in the foregoing method, it may be detected that a coverage hole exists between the AP 1 and the AP 3, but actually, no coverage hole exists between the AP 1 and the AP 3, because there is still the AP 2 between the AP 1 and the AP 3. That is, the roaming path of the AP 1 to the AP 3 have alternative roaming paths: AP 1 to AP 2 and AP 2 to AP 3, and no coverage hole exists on the alternative roaming paths. When the roaming jump phenomenon occurs, a coverage hole may be incorrectly detected.

Optionally, in a process of detecting whether the coverage hole exists between the first AP and the second AP, it may be further determined first whether the roaming path between the first AP and the second AP has alternative roaming paths. If the roaming path between the first AP and the second AP has the alternative roaming paths, whether the coverage hole exists between the first AP and the second AP may not be further determined.

Specifically, for a roaming path between two APs, a criterion for determining whether alternative roaming paths exist includes the following conditions.

(1) Another AP exists, a total quantity of roaming times on a roaming path between one of the two APs and the another AP is greater than a total quantity of roaming times on the roaming path between the two APs, and a total quantity of roaming times on a roaming path between the other of the two APs and the another AP is greater than the total quantity of roaming times on the roaming path between the two APs.

(2) The roaming path between one of the two APs and the another AP satisfies a roaming standard, and the roaming path between the other of the two APs and the another AP satisfies the roaming standard. The roaming standard includes that the total quantity of roaming times is greater than a sixth quantity threshold and a roaming fulfillment rate is greater than a fourth proportion threshold. Herein, the roaming fulfillment rate may be represented by using a ratio of a quantity of roaming times of the terminal whose signal strength before roaming is greater than the second signal strength threshold to the total quantity of roaming times, or may be represented by using a ratio of a quantity of roaming times corresponding to roaming duration that is less than the duration threshold to the total quantity of roaming times.

The total quantity of roaming times on the roaming path may alternatively be represented by a quantity of terminals associated with the roaming path. The terminal associated with the roaming path is a terminal that roams on the roaming path. Generally, the quantity of terminals associated with the roaming path is positively correlated with the total quantity of roaming times on the roaming path. In a special example, the quantity of terminals associated with the roaming path is equal to the total quantity of roaming times on the roaming path.

It should be understood that, only when the foregoing two conditions are both met, it is considered that the roaming path between the two APs has the alternative roaming paths.

FIG. 7 is used as an example. If it is to be determined whether the coverage hole exists on the roaming path AP 1→AP 3, it may be first determined whether the roaming path AP 1→AP 3 has alternative roaming paths. Details are as follows.

(1) For the roaming path AP 14 AP 3

If the AP 2 exists, roaming paths AP 1→AP 2 and AP 2→AP 3 exist. A total quantity of roaming times on the roaming path AP 1→AP 2 is greater than a total quantity of roaming times on the roaming path AP 1→AP 3, or a quantity of terminals associated with the roaming path AP 1→AP 2 is greater than a quantity of terminals associated with the roaming path AP 1→AP 3. In addition, a total quantity of roaming times on the roaming path AP 2~>AP 3 is greater than the total quantity of roaming times on the roaming path AP 1→AP 3, or a quantity of terminals associated with the roaming path AP 2 4 AP 3 is greater than the quantity of terminals associated with the roaming path AP 1→AP 3. In this way, it is considered that the roaming path AP 1→AP 3 may have the alternative roaming paths. In other words, it is considered that the roaming path AP 1→AP 2 and the roaming path AP 2→AP 3 may be the alternative roaming paths of the roaming path AP 1→AP 3.

(2) For the roaming path AP 1→AP 2 and the roaming path AP 2→AP 3

If the roaming path AP 1→AP 2 and the roaming path AP 2→AP 3 both meet the roaming standard, it is determined that the roaming path AP 1→AP 2 and the roaming path AP 2→AP 3 are the alternative roaming paths of the roaming path AP 1 4 AP 3.

It should be understood that, if the AP 2 meets both the foregoing two conditions, whether the coverage hole exists on the roaming path AP 1→AP 3 is no longer determined. Otherwise, whether the coverage hole exists on the roaming path AP 1→AP 3 is still determined based on the method shown in FIG. 6.

Before detecting whether the coverage hole exists between the two APs, it is first determined whether the roaming path between the two APs has the alternative roaming paths, to determine that a roaming jump phenomenon does not exist when a terminal roams between the two APs, thereby reducing occurrence of incorrect detection of coverage hole, and helping improve accuracy of coverage hole detection.

FIG. 8 is a schematic diagram of an application procedure of coverage hole detection according to an embodiment of this application. The procedure includes but is not limited to the following steps.

801: An analyzer receives association data of a terminal.

For each terminal (Station, STA), after the terminal is associated with an AP, the AP may detect association data of the terminal. One or more APs exist in a network. Each AP sends the detected association data of the terminal to an AC. One or more ACs may exist in the network. Each AC sends the received association data of the terminal to the analyzer. In this way, the analyzer can obtain the association data of the terminal in the entire network.

802: The analyzer performs coverage hole detection.

The analyzer executes, based on the received association data of the terminal, the coverage hole detection method shown in FIG. 4, to determine an AP that has a coverage hole in the current network.

The analyzer executes, based on the received association data of the terminal, the coverage hole detection method shown in FIG. 6, to determine a roaming path on which a coverage hole exists. In this way, the analyzer may determine AP pairs that are in the current network and that have a coverage hole.

803: The analyzer displays the coverage hole and a network deployment improvement measure.

After determining the AP that has the coverage hole and the roaming path, the analyzer may further analyze a reason why the coverage hole exists, to determine a location of the coverage hole. After the location of the coverage hole is determined, the analyzer can further display the location of the coverage hole and the network deployment improvement measure. The network deployment improvement measure includes a coverage hole filling policy, namely, a position that is recommended for operations and maintenance personnel to deploy a new AP or enhance a coverage capability of the original AP. The operations and maintenance personnel adjust AP deployment on the network based on the network deployment improvement measure to enhance signal coverage at the location of the coverage hole, implement full network coverage, and improve user experience.

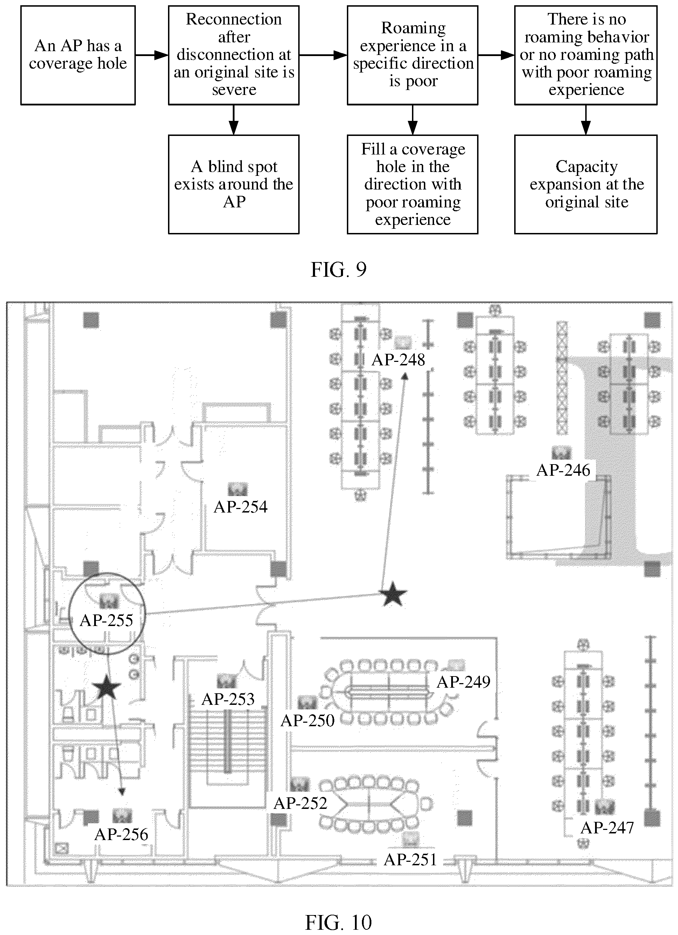

FIG. 9 is a schematic flowchart of recommending a coverage hole filling policy according to an embodiment of this application. As shown in FIG. 9, for an AP that has a coverage hole, if a terminal associated with the AP that has the coverage hole has a severe phenomenon of reconnection after disconnection at an original site, it indicates that there may be a blind spot around the AP that has the coverage hole. In this case, whether there is the blind spot around the AP that has the coverage hole needs to be checked. The phenomenon of reconnection after disconnection at the original site means that a terminal is disassociated from an AP and then is re-associated with the AP. That is, the terminal goes online and offline repeatedly for a same AP. The blind spot is a closed space that is independent in a physical space, where no AP is installed in the closed space for coverage. If there is the blind spot around the AP that has the coverage hole, an AP is added in the blind spot. Further, for an AP that has a coverage hole, if a terminal associated with the AP that has the coverage hole fixedly roams to another AP, and roaming experience of the terminal roaming from the AP to the another AP is poor, it indicates that the coverage hole that the AP has extends toward the another AP, and an AP needs to be added between the two APs. Furthermore, for an AP that has a coverage hole, if a terminal associated with the AP that has the coverage hole almost does not perform a roaming behavior, or experience of a roaming behavior is good (in other words, roaming does not occur on a roaming path with poor roaming experience), it indicates that a coverage area of the AP that has the coverage hole is closed, and capacity expansion at an original site needs to be performed. The capacity expansion at the original site refers to adding an AP around the AP that has the coverage hole. A manner for adding the AP may be: The AP that has the coverage hole remains unchanged, and the added AP is deployed based on an actual physical environment and around the AP that has the coverage hole. Alternatively, a manner for adding the AP may be: The AP that has the coverage hole and the added AP are deployed in a distributed manner around an original location of the AP that has the coverage hole.

For example, FIG. 10 is a schematic presentation diagram of a coverage hole in an office area and a recommended location for coverage hole filling according to an embodiment of this application. As shown in FIG. 10, APs in a current network environment include an AP-246, an AP-247, an AP-248, an AP-249, an AP-250, an AP-251, an AP-252, an AP-253, an AP-254, an AP-255, and an AP-256. An analyzer detects that the AP-255 has a coverage hole, the coverage hole exists between the AP-255 and the AP-248, and the coverage hole exists between the AP-255 and the AP-256. In addition, a terminal associated with the AP-255 always roam to the AP-248 and the AP-256. In this way, based on the foregoing coverage hole detection result, the analyzer recommends that the coverage hole be filled on a roaming path between the AP-255 and the AP-248 and a roaming path between the AP-255 and the AP-256. For example, a pentagonal star location in FIG. 10 is the recommended location for coverage hole filling.

In conclusion, in this application, a coverage hole of an AP is detected based on a resident terminal associated with the AP and signal quality of the resident terminal, and a coverage hole between APs is determined based on roaming behaviors of a plurality of terminals between the APs, so that the coverage hole in a WLAN network can be comprehensively and accurately detected. In addition, in this application, a comparison threshold in the foregoing detection process may be further dynamically adjusted based on a network scenario, to further improve detection accuracy. In addition, in this application, a location of the coverage hole may be further determined, and an effective coverage hole filling policy is recommended based on the location of the coverage hole, so that the operations and maintenance personnel can quickly and effectively adjust AP deployment, thereby enhancing signal coverage of a WLAN network.

It should be noted that for a series of steps or operations described in FIG. 8, refer to corresponding descriptions in embodiments shown in FIG. 1 to FIG. 7.

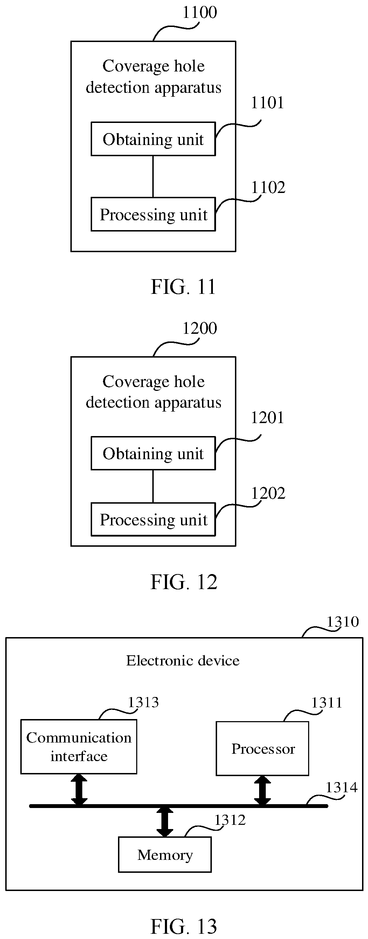

FIG. 11 is a schematic diagram of a structure of a coverage hole detection apparatus 1100 according to an embodiment of this application. The apparatus 1100 has a function of implementing the coverage hole detection method shown in FIG. 4. The function may be implemented by hardware, or may be implemented by hardware executing corresponding software. The hardware or the software includes one or more modules corresponding to the foregoing function.

In a possible implementation, the apparatus 1100 includes an obtaining unit 1101 and a processing unit 1102. The obtaining unit 1101 is configured to obtain a quantity of resident terminals of an AP and a quantity of weak-coverage terminals in the resident terminals. The processing unit 1102 is configured to determine, based on the quantity of resident terminals of the AP and the quantity of weak-coverage terminals in the resident terminals, whether the AP has a coverage hole. The resident terminal of the AP is a terminal whose duration of association with the AP is greater than a duration threshold. The weak-coverage terminal is a terminal that is associated with the AP and whose signal strength is less than a signal strength threshold.

In a possible implementation, the processing unit 1102 is specifically configured to: when the quantity of weak-coverage terminals reaches a quantity threshold, determine that the AP has the coverage hole; and/or when a ratio of the quantity of weak-coverage terminals to the quantity of resident terminals reaches a proportion threshold, determine that the AP has the coverage hole.

In a possible implementation, the processing unit 1102 is further configured to: set a weight of each resident terminal based on duration of association between each resident terminal and the AP, and adjust the quantity of resident terminals based on the weight of each resident terminal.

It should be noted that, for implementation of each unit of the coverage hole detection apparatus 1100 described in FIG. 11, refer to corresponding descriptions in the embodiment shown in FIG. 4 or FIG. 5. In addition, for beneficial effects brought by the coverage hole detection apparatus 1100 described in FIG. 11, refer to corresponding descriptions in the embodiment shown in FIG. 4 or FIG. 5. Details are not described herein again.

FIG. 12 is a schematic diagram of a structure of a coverage hole detection apparatus 1200 according to an embodiment of this application. The apparatus 1200 has a function of implementing the coverage hole detection method shown in FIG. 6. The function may be implemented by hardware, or may be implemented by hardware executing corresponding software. The hardware or the software includes one or more modules corresponding to the foregoing function.

In a possible implementation, the apparatus 1200 includes an obtaining unit 1201 and a processing unit 1202. The obtaining unit 1201 is configured to obtain a roaming behavior of a terminal between a first AP and a second AP. The processing unit 1202 is configured to determine, based on the roaming behavior of the terminal between the first AP and the second AP, that a coverage hole exists between the first AP and the second AP. The roaming behavior of the terminal between the first AP and the second AP includes roaming behaviors of a plurality of terminals between the first AP and the second AP.

In a possible implementation, the roaming behavior includes roaming handover duration. The obtaining unit 1201 is specifically configured to obtain roaming handover duration of the plurality of terminals. The processing unit 1202 is specifically configured to: when the roaming handover duration of the plurality of terminals meets a first condition, determine that the coverage hole exists between the first AP and the second AP. Roaming handover duration of each terminal in the plurality of terminals indicates: duration from a time point when the terminal leaves the first AP to a time point when the terminal is associated with the second AP, or duration from a time point when the terminal leaves the second AP to a time point when the terminal is associated with the first AP.

In a possible implementation, the first condition includes: a quantity of terminals whose roaming handover duration reaches a duration threshold reaches a quantity threshold; and/or a proportion of the quantity of terminals whose roaming handover duration reaches the duration threshold reaches a proportion threshold.

In a possible implementation, that the terminal leaves the first AP includes: The terminal is disassociated from the first AP; or signal strength of the first AP associated with the terminal is less than a signal strength threshold.

In a possible implementation, the roaming behavior includes signal strength before roaming. The obtaining unit 1201 is specifically configured to obtain N pieces of signal strength that is of the terminal before roaming of the plurality of terminals. The processing unit 1202 is specifically configured to: when the signal strength before roaming of the plurality of terminals meet a second condition, determine that the coverage hole exists between the first AP and the second AP. Signal strength before roaming of each terminal in the plurality of terminals includes: N pieces of signal strength that is of the terminal before the terminal is associated with the second AP in a process in which the terminal roams from the first AP to the second AP, and/or N pieces of signal strength that is of the terminal before the terminal is associated with the first AP in a process in which the terminal roams from the second AP to the first AP, where N is an integer greater than or equal to 1.

In a possible implementation, the second condition includes: a quantity of terminals whose signal strength before roaming is less than the signal strength threshold reaches the quantity threshold, and/or a proportion of a quantity of terminals whose signal strength before roaming is less than the signal strength threshold reaches the proportion threshold.

In a possible implementation, the processing unit 1202 is further configured to: determine, based on a roaming behavior of a terminal between a third AP and a fourth AP, that the coverage hole exists between the third AP and the fourth AP; and display a location of the coverage hole on a graphical user interface. The location of the coverage hole is a crosspoint of a connection line between the first AP and the second AP and a connection line between the third AP and the fourth AP.

It should be noted that, for implementation of each unit of the coverage hole detection apparatus 1200 described in FIG. 12, refer to corresponding descriptions in the embodiment shown in FIG. 6. In addition, for beneficial effects brought by the coverage hole detection apparatus 1200 described in FIG. 12, refer to corresponding descriptions in the embodiment shown in FIG. 6. Details are not described herein again.

FIG. 13 is a schematic diagram of a structure of an electronic device 1310 according to an embodiment of this application. The electronic device 1310 includes a processor 1311, a memory 1312, and a communication interface 1313. The processor 1311, the memory 1312, and the communication interface 1313 are connected to each other through a bus 1314.

The memory 1312 includes but is not limited to a random access memory (random access memory, RAM), a read-only memory (read-only memory, ROM), a programmable read-only memory (Programmable ROM, PROM), an erasable programmable read-only memory (erasable PROM), EPROM), or a compact disc read-only memory (compact disc read-only memory, CD-ROM), where the memory 1312 is configured to store a related computer program and data. The communication interface 1313 is configured to receive and send data.

The processor 1311 may be one or more central processing units (central processing unit, CPU). When the processor 1311 is one CPU, the CPU may be a single-core CPU, or may be a multi-core CPU.

The electronic device may be a WLAN controller, an analyzer, an AP, or the like. The processor 1311 in the electronic device 1310 is configured to read the computer program code stored in the memory 1312, to perform the method in any one of embodiments shown in FIG. 4, FIG. 5, FIG. 6, and FIG. 8.

It should be noted that, for implementation of each operation of the electronic device 1310 described in FIG. 13, refer to corresponding descriptions in embodiments shown in FIG. 2 to FIG. 9. In addition, for beneficial effects brought by the electronic device 1310 described in FIG. 13, refer to corresponding descriptions in embodiments shown in FIG. 4, FIG. 5, FIG. 6, FIG. 8, and FIG. 9. Details are not described herein again.

An embodiment of this application further provides a chip, including a processor, configured to invoke a computer program from a memory and run a computer program, so that a device installed with the chip performs the method in any one of embodiments shown in FIG. 4, FIG. 5, FIG. 6, and FIG. 8.

An embodiment of this application further provides a computer-readable storage medium. The computer-readable storage medium stores instructions. When the instructions are executed by a processor, the method in any one of embodiments shown in FIG. 4, FIG. 5, FIG. 6, and FIG. 8 is implemented.

An embodiment of this application further provides a computer program product, including a computer program. When the computer program is executed by a processor, the method in any one of embodiments shown in FIG. 4, FIG. 5, FIG. 6, and FIG. 8 is implemented.

It should be understood that, the processor in embodiments of this application may be a central processing unit (Central Processing Unit, CPU). The processor may be further another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a ROM, a PROM, an EPROM, an electrically erasable programmable read-only memory (Electrically EPROM, EEPROM), or a flash memory. The volatile memory may be a RAM, and serves as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be further understood that first, second, third, and various numbers in this specification are merely used for differentiation for ease of description, but are not intended to limit the scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Person skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical, a mechanical, or another form.

The foregoing units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, combined, or removed based on an actual requirement.

The modules in the apparatus in embodiments of this application may be combined, divided, and deleted based on an actual requirement.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A coverage hole detection method, comprising:

   determining, based on a roaming behavior of a terminal between a first access point AP and a second AP, that a coverage hole exists between the first AP and the second AP, wherein the roaming behavior of the terminal between the first AP and the second AP comprises roaming behaviors of a plurality of terminals between the first AP and the second AP.

2. The method according to claim 1, wherein the roaming behavior comprises roaming handover duration, and the determining, based on a roaming behavior of a terminal between a first access point AP and a second AP, that a coverage hole exists between the first AP and the second AP comprises:

obtaining roaming handover duration of the plurality of terminals, and when the roaming handover duration of the plurality of terminals meets a first condition, determining that the coverage hole exists between the first AP and the second AP, wherein

roaming handover duration of each terminal in the plurality of terminals indicates: duration from a time point when the terminal leaves the first AP to a time point when the terminal is associated with the second AP, and/or duration from a time point when the terminal leaves the second AP to a time point when the terminal is associated with the first AP.

3. The method according to claim 2, wherein the first condition comprises:

a quantity of terminals whose roaming handover duration reaches a duration threshold reaches a quantity threshold; and/or a proportion of the quantity of terminals whose roaming handover duration reaches the duration threshold reaches a proportion threshold.

4. The method according to claim 2 or 3, wherein that the terminal leaves the first AP comprises:

the terminal dissociates from the first AP; or signal strength of the first AP associated with the terminal is less than a signal strength threshold.

5. The method according to claim 1, wherein the roaming behavior comprises signal strength before roaming, and the determining, based on a roaming behavior of a terminal between a first access point AP and a second AP, that a coverage hole exists between the first AP and the second AP comprises:

obtaining signal strength before roaming of the plurality of terminals, and when the signal strength before roaming of the plurality of terminals meets a second condition, determining that the coverage hole exists between the first AP and the second AP, wherein

signal strength before roaming of each terminal in the plurality of terminals comprises: N pieces of signal strength that is of the terminal before the terminal is associated with the second AP in a process in which the terminal roams from the first AP to the second AP, and/or N pieces of signal strength that is of the terminal before the terminal is associated with the first AP in a process in which the terminal roams from the second AP to the first AP, wherein N is an integer greater than or equal to 1.

6. The method according to claim 5, wherein the second condition comprises:

a quantity of terminals whose signal strength before roaming is less than a signal strength threshold reaches a quantity threshold; and/or a proportion of the quantity of terminals whose signal strength before roaming is less than the signal strength threshold reaches a proportion threshold.

7. The method according to any one of claims 1 to 6, wherein the method further comprises:

determining, based on a roaming behavior of a terminal between a third AP and a fourth AP, that the coverage hole exists between the third AP and the fourth AP; and displaying a location of the coverage hole on a graphical user interface, wherein the location of the coverage hole is a crosspoint of a connection line between the first AP and the second AP and a connection line between the third AP and the fourth AP.

8. A coverage hole detection method, comprising:

determining, based on a quantity of resident terminals of an access point AP and a quantity of weak-coverage terminals in the resident terminals, whether the AP has a coverage hole, wherein

the resident terminal of the AP is a terminal whose duration of association with the AP is greater than a duration threshold; and the weak-coverage terminal is a terminal that is associated with the AP and whose signal strength is less than a signal strength threshold.

9. The method according to claim 8, wherein the determining, based on a quantity of resident terminals of an access point AP and a quantity of weak-coverage terminals in the resident terminals, whether the AP has a coverage hole comprises:

when the quantity of weak-coverage terminals reaches a quantity threshold, determining that the AP has the coverage hole; and/or when a ratio of the quantity of weak-coverage terminals to the quantity of resident terminals reaches a proportion threshold, determining that the AP has the coverage hole.

10. The method according to claim 9, wherein the method further comprises:

setting a weight of each resident terminal based on duration of association between each resident terminal and the AP; and

adjusting the quantity of resident terminals based on the weight of each resident terminal.

11. A coverage hole detection apparatus, comprising:

an obtaining unit, configured to obtain a roaming behavior of a terminal between a first access point AP and a second AP, wherein the roaming behavior of the terminal between the first AP and the second AP comprises roaming behaviors of a plurality of terminals between the first AP and the second AP; and

a processing unit, configured to determine, based on the roaming behavior of the terminal between the first AP and the second AP, that a coverage hole exists between the first AP and the second AP.

12. The apparatus according to claim 11, wherein the roaming behavior comprises roaming handover duration, and

the obtaining unit is specifically configured to obtain roaming handover duration of the plurality of terminals, wherein roaming handover duration of each terminal in the plurality of terminals indicates: duration from a time point when the terminal leaves the first AP to a time point when the terminal is associated with the second AP, and/or duration from a time point when the terminal leaves the second AP to a time point when the terminal is associated with the first AP; and

the processing unit is specifically configured to: when the roaming handover duration of the plurality of terminals meets a first condition, determine that the coverage hole exists between the first AP and the second AP.

13. The apparatus according to claim 12, wherein the first condition comprises:

a quantity of terminals whose roaming handover duration reaches a duration threshold reaches a quantity threshold; and/or

a proportion of the quantity of terminals whose roaming handover duration reaches the duration threshold reaches a proportion threshold.

14. The apparatus according to claim 12 or 13, wherein that the terminal leaves the first AP comprises:

the terminal dissociates from the first AP; or signal strength of the first AP associated with the terminal is less than a signal strength threshold.

15. The apparatus according to claim 11, wherein the roaming behavior comprises signal strength before roaming, and

the obtaining unit is specifically configured to obtain signal strength before roaming of the plurality of terminals; and

the processing unit is specifically configured to: when the signal strength before roaming of the plurality of terminals meet a second condition, determine that the coverage hole exists between the first AP and the second AP, wherein signal strength before roaming of each terminal in the plurality of terminals comprises: N pieces of signal strength that is of the terminal before the terminal is associated with the second AP in a process in which the terminal roams from the first AP to the second AP, and/or N pieces of signal strength that is of the terminal before the terminal is associated with the first AP in a process in which the terminal roams from the second AP to the first AP, wherein N is an integer greater than or equal to 1.

16. The method according to claim 15, wherein the second condition comprises:

a quantity of terminals whose signal strength before roaming is less than a signal strength threshold reaches a quantity threshold; and/or

a proportion of the quantity of terminals whose signal strength before roaming is less than the signal strength threshold reaches a proportion threshold.

17. The apparatus according to any one of claims 11 to 15, wherein the processing unit is further configured to:

determine, based on a roaming behavior of a terminal between a third AP and a fourth AP, that the coverage hole exists between the third AP and the fourth AP; and

display a location of the coverage hole on a graphical user interface, wherein the location of the coverage hole is a crosspoint of a connection line between the first AP and the second AP and a connection line between the third AP and the fourth AP.

18. A coverage hole detection apparatus, comprising:

an obtaining unit, configured to obtain a quantity of resident terminals of an access point AP and a quantity of weak-coverage terminals in the resident terminals; and

a processing unit, configured to determine, based on the quantity of resident terminals of the AP and the quantity of weak-coverage terminals in the resident terminals, whether the AP has a coverage hole, wherein
the resident terminal of the AP is a terminal whose duration of association with the AP is greater than a duration threshold, and the weak-coverage terminal is a terminal that is associated with the AP and whose signal strength is less than a signal strength threshold.

19. The method according to claim 18, wherein the processing unit is specifically configured to:

when the quantity of weak-coverage terminals reaches a quantity threshold, determine that the AP has the coverage hole; and/or
when a ratio of the quantity of weak-coverage terminals to the quantity of resident terminals reaches a proportion threshold, determine that the AP has the coverage hole.

20. The method according to claim 19, wherein the processing unit is further configured to:

set a weight of each resident terminal based on duration of association between each resident terminal and the AP; and
adjust the quantity of resident terminals based on the weight of each resident terminal.

21. An electronic device, comprising:

a processor and a memory, wherein
the memory is coupled to the processor and stores a program executed by the processor, wherein when the program is executed by the processor, the electronic device is enabled to perform the method according to any one of claims 1 to 7 or claims 8 to 10.

22. A computer-readable storage medium, wherein the computer-readable storage medium stores instructions, and when the instructions are executed by a processor, the method according to any one of claims 1 to 7 or claims 8 to 10 is implemented.

23. A computer program product, comprising a computer program, wherein when the computer program is executed by a processor, the method according to any one of claims 1 to 7 or claims 8 to 10 is implemented.

FIG. 1

FIG. 2

AP 1　　　　　AP 2　　　　　　　AP 3

AP 4

AP 5

AP 6

FIG. 3

**400**　　　　　　　　　　　　　　　　　　　　　401

Determine, based on a quantity of resident terminals of an access point AP and a quantity of weak-coverage terminals in the resident terminals, whether the AP has a coverage hole, where the resident terminal of the AP indicates a terminal whose duration of association with the AP is greater than a duration threshold; and the weak-coverage terminal indicates a terminal that is associated with the AP and whose signal strength is less than a first signal strength threshold

FIG. 4

FIG. 5

**600** 601

Determine, based on a roaming behavior of a terminal between a first access point AP and a second AP, that a coverage hole exists between the first AP and the second AP, where the roaming behavior of the terminal between the first AP and the second AP includes roaming behaviors of a plurality of terminals between the first AP and the second AP

FIG. 6

AP 1          AP 2          AP 3

FIG. 7

| Analyzer | AC | AP | STA |

801: Receive association data of the terminal

802: Coverage hole detection

803: Display a coverage hole and a network deployment improvement measure

FIG. 8

| An AP has a coverage hole | → | Reconnection after disconnection at an original site is severe | → | Roaming experience in a specific direction is poor | → | There is no roaming behavior or no roaming path with poor roaming experience |

A blind spot exists around the AP

Fill a coverage hole in the direction with poor roaming experience

Capacity expansion at the original site

FIG. 9

FIG. 10

1100

Coverage hole
detection apparatus

1101

Obtaining unit

1102

Processing unit

FIG. 11

1200

Coverage hole
detection apparatus

1201

Obtaining unit

1202

Processing unit

FIG. 12

1310

Electronic device

1313

Communication
interface

1311

Processor

1314

1312

Memory

FIG. 13

## INTERNATIONAL SEARCH REPORT

| International application No. |
|---|
| **PCT/CN2023/082198** |

**A. CLASSIFICATION OF SUBJECT MATTER**

H04W24/02(2009.01)i

According to International Patent Classification (IPC) or to both national classification and IPC

**B. FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT, ENTXT, DWPI: 覆盖空洞, 漏洞, 漫游, 切换, 重选, 数量, 信号强度, 阈值, coverage hole, roaming, handover, reselect, number, signal strength, threshold

**C. DOCUMENTS CONSIDERED TO BE RELEVANT**

| Category* | Citation of document, with indication, where appropriate, of the relevant passages | Relevant to claim No. |
|---|---|---|
| X | CN 102111830 A (SHANGHAI RESEARCH CENTER FOR WIRELESS COMMUNICATIONS (WICO)) 29 June 2011 (2011-06-29) description, paragraphs 0002-0045, and figures 1-3 | 1-7, 11-17, 21-23 |
| X | CN 107113639 A (SAMSUNG ELECTRONICS CO., LTD.) 29 August 2017 (2017-08-29) description, paragraphs 0002-0108, and figures 1-8 | 8-10, 18-20, 21-23 |
| A | CN 104980939 A (HUAWEI TECHNOLOGIES CO., LTD.) 14 October 2015 (2015-10-14) entire document | 1-23 |
| A | WO 2021050417 A1 (CISCO TECHNOLOGY, INC.) 18 March 2021 (2021-03-18) entire document | 1-23 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 May 2023** | **01 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/082198**

| Patent document cited in search report | | | Publication date (day/month/year) | Patent family member(s) | | | Publication date (day/month/year) |
|---|---|---|---|---|---|---|---|
| CN | 102111830 | A | 29 June 2011 | None | | | |
| CN | 107113639 | A | 29 August 2017 | US | 2016142967 | A1 | 19 May 2016 |
| | | | | KR | 20160058431 | A | 25 May 2016 |
| | | | | WO | 2016080692 | A1 | 26 May 2016 |
| CN | 104980939 | A | 14 October 2015 | None | | | |
| WO | 2021050417 | A1 | 18 March 2021 | CN | 114391267 | A | 22 April 2022 |
| | | | | US | 10820263 | B1 | 27 October 2020 |
| | | | | EP | 4029304 | A1 | 20 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210299848